(19) Europäisches Patentamt
European Patent Office
Office européen des brevets

(11) **EP 3 244 373 A1**

(12) **EUROPEAN PATENT APPLICATION**
published in accordance with Art. 153(4) EPC

(43) Date of publication:
**15.11.2017 Bulletin 2017/46**

(21) Application number: **15876593.3**

(22) Date of filing: **28.07.2015**

(51) Int Cl.:
***G07D 11/00*** *(2006.01)*

(86) International application number:
**PCT/CN2015/085256**

(87) International publication number:
**WO 2016/110089 (14.07.2016 Gazette 2016/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.01.2015 CN 201510009633**

(71) Applicant: **GRG Banking Equipment Co., Ltd.**
**Guangzhou, Guangdong 510663 (CN)**

(72) Inventors:
• **QING, Qinghai**
  **Guangzhou**
  **Guangdong 510663 (CN)**
• **KE, Wenhui**
  **Guangzhou**
  **Guangdong 510663 (CN)**
• **WANG, Qinghua**
  **Guangzhou**
  **Guangdong 510663 (CN)**
• **XU, Jun**
  **Guangzhou**
  **Guangdong 510663 (CN)**
• **XIANG, Xuefei**
  **Guangzhou**
  **Guangdong 510663 (CN)**
• **LI, Haoyu**
  **Guangzhou**
  **Guangdong 510663 (CN)**
• **LIU, Maoqi**
  **Guangzhou**
  **Guangdong 510663 (CN)**

(74) Representative: **Maiwald Patentanwalts GmbH**
**Engineering**
**Elisenhof**
**Elisenstrasse 3**
**80335 München (DE)**

(54) **CASH DISTRIBUTION METHOD, CASH DISTRIBUTION APPARATUS AND FINANCIAL SELF-SERVICE DEVICE**

(57)    A cash distribution method, a cash distribution apparatus and a financial self-service device. The cash distribution method comprises: suspending cash dispensing in case of abnormality when cash is dispensed from a mixed cash box; acquiring the balance of cash dispensed according to the cash distribution limit and the total dispensed cash; continuing cash distribution for the balance of cash dispensed to obtain a continuous cash dispensing result; and continuing to dispense cash according to the continuous cash dispensing result. The technical problems in existing cash distribution technology that increasing wear on hardware of a machine core increases the maintenance cost and consumes a lot of time, reducing the cash dispensing efficiency, can be solved.

Figure 1

**Description**

The application claims the priority to Chinese Patent Application No.201510009633.3, titled "CASH DISTRIBUTION METHOD AND DEVICE AND FINANCIAL SELF-SERVICE DEVICE", filed on January 7, 2015 with the State Intellectual Property Office of the People's Republic of China, the entire content of which is incorporated herein by reference.

**TECHNICAL FIELD**

The present disclosure relates to the field of financial device, and in particular to a banknote distribution method, a banknote distribution apparatus and a financial self-service device.

**BACKGROUND**

With the development of economy, the demand for self-service terminals is growing, and in the financial industry, the number of financial self-service devices is also extended to meet the growing market demand.
At present, an existing financial self-service device usually uses a banknote box to store banknotes, and one banknote box stores one denomination of banknotes. When a customer performs a transaction, a financial self-service device acquires various denominations of banknotes from different banknote boxes according to a banknote dispending limit provided by the customer and dispenses banknotes for the customer, to meet a demand for multiple banknote dispensing limits for customers.
However, due to manufacturing costs, device space and other factors, an amount of banknote boxes in an existing financial self-service device is limited. And, the existing financial self-service device can store only one denomination of banknotes in one banknote box in the banknote dispensing method, an amount of banknote denominations in the financial self-service device is limited. Therefore, the banknote dispensing capacity and the banknote dispensing scope of the financial self-service device are limited, and the demand for various banknote dispensing limits for customers can not be satisfied.
There is a technology for storing multiple denominations of banknotes in one banknote box. In the conventional technology, a banknote dispensing technology about mixed denominations is disclosed in a patent application No.CN201410372966.8, which discloses the following techniques. A sum of first several banknotes is directly calculated. It is determined whether the sum is equal to a banknote dispensing limit (that is a total banknote dispensing limit as required). if the sum is not equal to the banknote dispensing limit, the banknote dispensing is failed. If the sum is equal to the banknote dispensing limit, banknotes are dispensed. And if there are banknotes withdrawn to a recycling box in a process of banknote outputting, the banknote dispensing is failed, and dispensed banknotes are withdrawn and another banknote dispensing is performed based on the banknote dispensing limit. Due to unqualified and other unexpected reasons, the banknotes as planned to be outputted cannot be outputted, so a banknote outputting based on the banknote dispensing limit cannot be completed, resulting in a failure of the banknote dispensing. Then outputted banknotes are withdrawn for the next dispensing based the banknote dispensing limit.
This banknote dispensing technology has the following limitations. If there is a banknote recycling in a process of banknote outputting, a banknote outputting as planned to realize a banknote dispensing limit is failed, and outputted banknotes need to be withdrawn to perform next banknote dispensing based on the banknote dispensing limit. One more time of banknote dispensing and banknote outputting not only increase wear on hardware of a machine core which will result in an increase in maintenance cost, but also take a long time which will reduce the banknote outputting efficiency.

**SUMMARY**

Embodiments of the present disclosure provide a banknote dispensing method, a banknote dispensing apparatus and a financial self-service device, to address the technical issues of an increase in maintenance cost caused by an increased wear on hardware of a machine core, long consuming time and reduced banknote dispensing efficiency in existing banknote dispensing technology.
A banknote dispensing method is provided according to an embodiment of the present disclosure. The method includes:

suspending a banknote outputting from a mixed banknote box in a case that the banknote outputting becomes abnormal;

acquiring a banknote outputting balance according to a banknote dispensing limit and a total amount of outputted banknotes;

continuing the banknote dispensing according to the banknote outputting balance to obtain a continued banknote dispensing result; and

continuing to output banknotes according to the continued banknote dispensing result.

Optionally, the continuing the banknote dispensing according to the banknote outputting balance to obtain a continued banknote dispensing result includes:

continuing the banknote dispensing according to the banknote outputting balance;

determining whether the banknote dispensing is successful;

obtaining the continued banknote dispensing result in case of a positive determination; or executing a preset operation in case of negative determination.

Optionally, the executing a preset operation includes:

transferring one outputted banknote; and

returning to the step of acquiring the banknote outputting balance according to the banknote dispensing limit and a total amount of outputted banknotes.

Optionally, after the acquiring the banknote outputting balance according to the banknote dispensing limit and a total amount of outputted banknotes, the method further includes:

determining whether the banknote outputting balance is less than the banknote dispensing limit; and

going to the step of continuing the banknote dispensing according to the banknote outputting balance in case of positive determination, or redispensing banknotes according to the banknote dispensing limit in case of negative determination.

Optionally, before the redispensing banknotes according to the banknote dispensing limit, the method further includes: recycling all outputted banknotes.
A banknote dispensing apparatus is provided according to an embodiment of the present disclosure includes:

a banknote outputting suspending module, configured to suspend a banknote outputting in a case that the banknote outputting from a mixed banknote box becomes abnormal;

a balance acquiring module, configured to acquire a banknote outputting balance according to a banknote dispensing limit and a total amount of outputted banknotes;

a continued banknote dispensing module, configured to continue banknote dispensing according to the banknote outputting balance to obtain a continued banknote dispensing result; and

a continued banknote outputting module, configured to continue to output banknotes according to the continued banknote dispensing result.

Optionally, the continued banknote dispensing module specifically includes:

a banknote dispensing unit, configured to continue the banknote dispensing according to the banknote outputting balance;

a determining unit, configured to determine whether the banknote dispensing by the banknote dispensing unit is successful;

an obtaining unit, configured to obtain a continued banknote dispensing result if the determining unit determines that the banknote dispensing is successful; and

an executing unit, configured to execute a preset operation if the determining unit determines that the banknote dispensing is failed.

Optionally, the executing unit specifically includes:

a transferring subunit, configured to transfer one outputted banknote if the determining unit determines that the banknote dispensing is failed; and

a returning subunit, configured to return to trigger the balance acquiring module after an execution of the transferring subunit.

Optionally, the banknote dispensing apparatus further includes:

a balance determining module, configured to determine whether the banknote outputting balance is less than the banknote dispensing limit;

a first triggering module, configured to trigger the continued banknote dispensing module if the balance determining module determines that the banknote outputting balance is less than the banknote dispensing limit;

a recycling module, configured to recycle all outputted banknotes if the balance determining module determines that the banknote outputting balance is not less than the banknote dispensing limit; and

a redispensing module, configured to redispense banknotes according to the banknote dispensing limit after an execution of the recycling module.

A financial self-service device according to an embodiment of the present disclosure includes multiple mixed banknote boxes. The multiple mixed banknote boxes are configured to store banknotes of multiple denominations mixedly and access the banknotes in a stack manner. The financial self-service device further includes the above banknote dispensing apparatus.

As can be seen from the above technical solutions, the embodiments of the present disclosure have the following advantages.

In the embodiments of the present disclosure, firstly, banknote dispensing is suspended in case of abnormality when banknotes are dispensed from a mixed banknote box. Then, a banknote dispensing balance is acquired according to a banknote distribution limit and a total amount of dispended banknotes. Afterwards, banknote distribution for the banknote dispensing balance is continued to obtain a continuous banknote dispensing result. At last, banknotes are continued to dispense according to the continuous banknote dispensing result. In the embodiment, when there is an abnormal situation, banknote distribution is performed again for remaining banknote dispensing balance and banknotes are continued to dispense according to a continuous banknote dispensing result, therefore a current banknote distribution limit is satisfied without withdrawing dispensed banknotes to redistribute for the banknote distribution limit. Hence banknote redistribution and banknote re-dispensing are avoided; not only wear on hardware of a machine core and maintenance cost are reduced, but also time for banknote distribution is decreased and the banknote dispensing efficiency is improved, thereby improving user satisfaction on products.

## BRIEF DESCRIPTION OF THE DRAWINGS

Figure 1 is a flow chart of a banknote dispensing method according to an embodiment of the present disclosure;

Figure 2 is a flow chart of a banknote dispensing method according to another embodiment of the present disclosure;

Figure 3 is a structural schematic diagram of a banknote dispensing apparatus according to an embodiment of the present disclosure;

Figure 4 is a structural schematic diagram of a banknote dispensing apparatus according to another embodiment of the present disclosure; and

Figure 5 is a structural schematic diagram of a financial self-service device according to an embodiment of the present disclosure.

## DETAILED DESCRIPTION OF THE EMBODIMENTS

Embodiments of the present disclosure provide a banknote dispensing method, a banknote dispensing apparatus and a financial self-service device, to address the technical issue of an increase in maintenance cost caused by an increased wear on hardware of a machine core, long consuming time and reduced banknote outputting efficiency in existing banknote dispensing technology.

The technical solution according to the embodiments of the present disclosure will be described clearly and completely as follows in conjunction with the accompany drawings in the embodiments of the present disclosure, so that purposes, characteristics and advantages of the present disclosure can be more obvious and understandable. It is obvious that the described embodiments are only a part of the embodiments according to the present disclosure. All the other embodiments obtained by those skilled in the art based on the embodiments in the present disclosure without any creative work belong to the scope of the present disclosure.

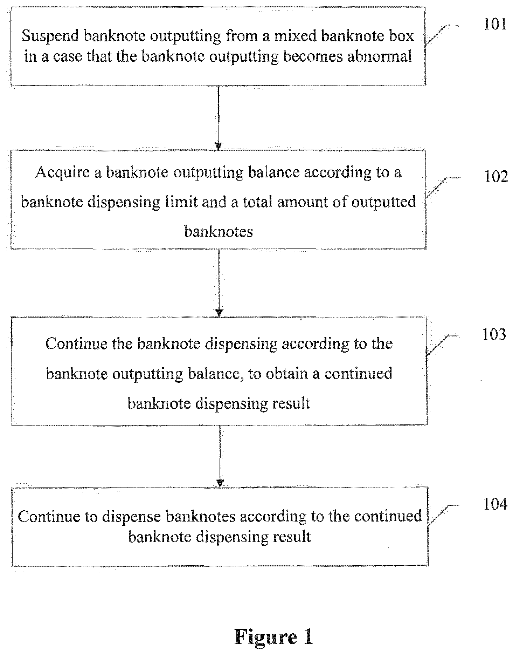

Referring to Figure 1, a banknote dispensing method according to an embodiment of the present disclosure includes steps 101 to 104.

In step 101, a banknote outputting from a mixed banknote box is suspended in a case that the banknote outputting becomes abnormal.

The banknotes are outputted from the mixed banknote box. And if there is an abnormality, it is needed to suspend the banknote outputting.

In step 102, a banknote outputting balance is acquired according to a banknote dispensing limit and a total amount of outputted banknotes.

After the banknote outputting is suspended, the banknote outputting balance may be acquired according to the banknote dispensing limit and the total amount of outputted banknotes. The banknote dispensing limit is a current total amount of banknote dispensing as required by a user.

In step 103, the banknote dispensing is continued according to the banknote outputting balance, to obtain a continued banknote dispensing result.

After the banknote outputting balance is acquired according to the banknote dispensing limit and the total amount of outputted banknotes, the banknote dispensing may be performed according to the banknote outputting balance, to obtain a continued banknote dispensing result.

In step 104, banknotes are continued to be outputted according to the continued banknote dispensing result.

After the continued banknote dispensing result is obtained, the banknotes may be continued to be outputted according to the continued banknote dispensing result.

In the embodiment of the present disclosure, firstly, the banknote outputting from a mixed banknote box is suspended in a case that the banknote outputting becomes abnormal. Then, a banknote outputting balance is acquired according to a banknote dispensing limit and a total amount of outputted banknotes. Afterwards, the banknote dispensing is continued according to the banknote outputting balance to obtain a continued banknote dispensing result. Finally, banknotes are continued to be outputted according to the continued banknote dispensing result. In the embodiment, when there is an abnormality, banknote dispensing is continued according to the banknote outputting balance and banknotes are continued to be outputted according to a continued banknote dispensing result, and therefore, a current banknote dispensing limit is satisfied without the need of recycling outputted banknotes for the next dispensing according to the banknote dispensing limit. Hence a second banknote dispensing and a second banknote outputting are avoided. Not only wear on hardware of a machine core and maintenance cost are reduced, but also time for banknote dispensing is decreased and the banknote outputting efficiency is improved, thereby improving user satisfaction on products.

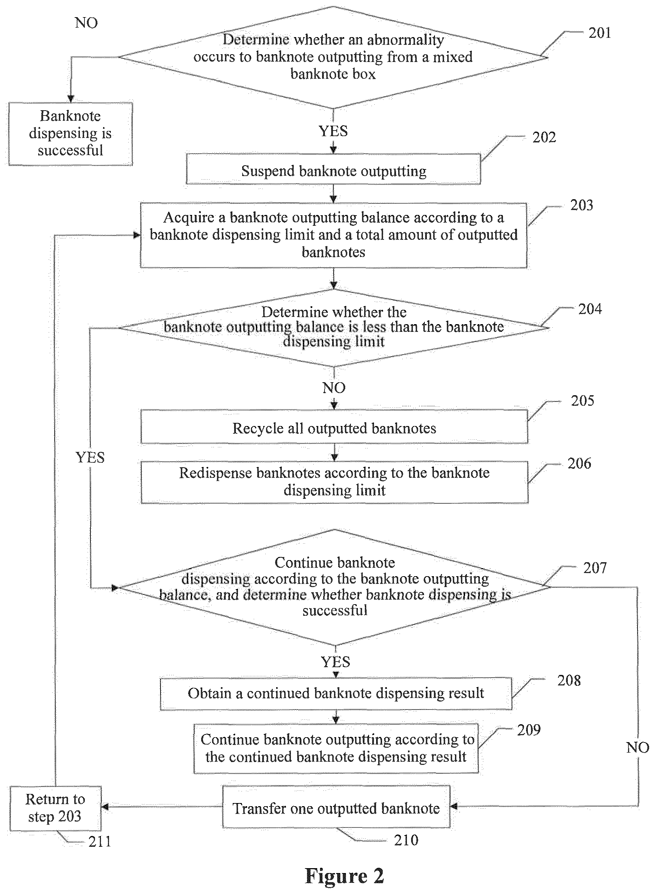

For understanding, a banknote dispensing method according to an embodiment of the present disclosure is described in detail below. Referring to Figure 2, a banknote dispensing method according to an embodiment of the present disclosure includes steps 201 to 211.

In step 201, it is determined whether an abnormality occurs to a banknote outputting from a mixed banknote box, and in case of positive determination, the method goes to step 202, otherwise, the banknote dispensing is determined as successful.

First, it is determined whether an abnormality occurs to the banknote outputting from the mixed banknote box. If it is determined there is an abnormality, the method goes to step 202; otherwise, the banknote dispensing is determined as successful. The abnormality includes: banknote recycling, banknote jam in a slot of the mixed banknote box and so on. The banknote jam in a slot of the mixed banknote box causes the mixed banknote box not continue to output banknotes, hence the mixed box banknote box cannot dispense banknotes according to a banknote outputting balance.

In step 202, the banknote outputting is suspended.

If there is an abnormality in the mixed banknote box, the banknote outputting is suspended, for subsequent measures.

In step 203, a banknote outputting balance is acquired according to a banknote dispensing limit and a total amount of outputted banknotes.

After banknote outputting is suspended, the banknote outputting balance may be acquired according to the banknote dispensing limit and a total amount of outputted banknotes. The banknote dispensing limit is a current total amount of banknote dispensing required by a user. It may be understood that the banknote outputting balance is equal to a difference between the banknote dispensing limit and the total amount of outputted banknotes.

In step 204, it is determined whether the banknote outputting balance is less than the banknote dispensing limit and the method goes to step 207 in case of positive determination, otherwise, the method goes to step 205.

After the banknote outputting balance is acquired, it is determined whether the banknote outputting balance is less than the banknote dispensing limit. the method goes to step 207 if the banknote outputting balance is less than the banknote dispensing limit. The method goes to step 205 if the banknote outputting balance is not less than the banknote dispensing limit. It may be understood that, the banknote outputting balance is calculated as incorrect if the banknote outputting balance is greater than the banknote dispensing limit,. If the banknote outputting balance is equal to the banknote dispensing limit, the total amount of outputted banknotes is zero, that is, abnormality has been occurred when a first banknote is outputted from the mixed banknote box. remedial measures are not needed and a banknote redispensing according to the banknote dispensing limit may be performed. The banknote outputting balance less than the banknote dispensing limit is determined as normal, and remedial measures is made to continue the banknote dispensing.

In step 205, all outputted banknotes are recycled.

If the banknote outputting balance is not less than the banknote dispensing limit, all outputted banknotes are recycled. And the all outputted banknotes may be stored in other banknote boxes, or recycled in an original banknote box, which is not limited herein.

In step 206, a banknote redispensing is performed according to the banknote dispensing limit.

After all outputted banknotes are recycled, the banknote redispensing may be performed according to the banknote dispensing limit.

In step 207, the banknote dispensing is continued for the banknote outputting balance, it is determined whether the banknote dispensing is successful, and the method goes to step 208 in case of positive determination, otherwise, the method goes to step 210.

When the banknote outputting balance is less than the banknote dispensing limit, the banknote dispensing may be continued according to the banknote outputting balance, and it is determined whether the banknote dispensing is successful. If the banknote dispensing is successful, the method goes to step 208. If the banknote dispensing is unsuccessful, otherwise the method goes to step 210.

It should be noted that, in the continued banknote dispensing according to the banknote outputting balance, if a denomination of a banknote next to a last outputted banknote in the mixed banknote box involved in an original banknote dispensing plan is exactly equal to a denomination of a recycled banknote, the banknote outputting can be continued according to the original banknote dispensing scheme plan, then a banknote having a same denomination to the above recycled banknote is outputted, so the banknote dispensing is successful and the method ends.

In step 208, a continued banknote dispensing result is obtained.

When the banknote dispensing is continued according to the banknote outputting balance and the banknote dispensing is successful, a corresponding continued banknote dispensing result is obtained. The continued banknote dispensing result indicates the amount of banknotes is to be dispensed respectively from multiple mixed banknote boxes. For example, 3 mixed banknote boxes, which are banknote box A, banknote box B and banknote box C, are used for banknote dispensing. The continued banknote dispensing result indicates: X pieces of banknotes are to be dispensed from the banknote box A, Y pieces of banknotes are to be dispensed from the banknote box B and Z pieces of banknotes are to be dispensed from the banknote box C.

In step 209, banknote outputting is continued according to the continued banknote dispensing result.

After the continued banknote dispensing result is obtained, the banknote outputting may be continued according to the continued banknote dispensing result. If the continued banknote outputting is successful, a total amount of continued outputted banknotes and the previous outputted banknotes is equal to the banknote dispensing limit.

It should be noted that, if there is an abnormality, such as banknote recycling or banknote jam during the banknote outputting process according to the continued banknote dispensing result, the banknote dispensing method according to the embodiment of the present disclosure may be continued to dispense and output banknotes according to the banknote outputting balance.

In step 210, one outputted banknote is transferred.

If banknote dispensing is continued according to the banknote outputting balance but failed, one outputted banknote may be transferred.

It should be noted that, the step that one outputted banknote is transferred may be recycling one of the outputted banknotes before the jam into the recycling box , or transferring one of the outputted banknotes before the jam into a deposit box or a circulation box except the banknote box storing the outputted banknotes.

In step 211, the method returns to step 203.

After transferring one of the outputted banknotes, the method returns to perform step 203. It may be understood that, since one of the outputted banknotes is transferred, a total amount of the outputted banknotes becomes smaller while a corresponding banknote outputting balance becomes greater, and a possibility of banknote dispensing according to the banknote outputting balance may be changed. Therefore, the method returns to step 203.

It should be noted that, if the banknote dispensing method is performed for several times, it is possible that outputted banknotes are all transferred, a total amount of outputted banknotes is zero, and the banknote outputting balance is equal to the banknote dispensing limit. In step 204, it is determined that the banknote outputting balance is not less than the banknote dispensing limit, a banknote redispensing should be performed according to the banknote dispensing limit. That means, continued banknote dispensing is impossible to meet the banknote dispensing limit in response to the abnormality of the mixed banknote box in the current recycle of dispensing.

For understanding, hereinafter are described several practical applications in which the banknote dispensing method according to the embodiment of the present disclosure in Figure 2 is applied.

In a first practical application, banknote dispensing are accomplished by a banknote outputting from one mixed banknote box and one continued banknote dispensing.

It is assumed that n banknotes are stored in a mixed banknote box, the denomination of each of the banknotes is Di (i=1, 2, 3...n, where n is a total number of banknotes in the box) from stack top to stack bottom, and a sum of the first n banknotes (n=1,2,3...n) is $\sum_{i=1}^{n} D_i = S_n$.

An ordered array S(i) of each mixed banknote box is calculated, where S(1)=D1 and a recursion formula is S(i+1)=S(i)+D(i+1), then a general term formula of S(i) is:

$$S(n) = D_1 + D_2 + \ldots + D_n = \sum_{i=1}^{n} D_i.$$

It is assumed that is n banknotes are stored in a mixed banknote box. A banknote amount array is obtained by calculating the amount of banknotes from the first to the last one (i.e., the first, the second...and the $i^{th}$ ...until the $n^{th}$ banknote in the sequence) in the mixed banknote box. The $i^{th}$ element value in the banknote amount array is equal to a total amount of i banknotes from the first to the $i^{th}$ one.

For example, if there are 16 banknotes in the mixed banknote box A, and denominations from the first to the $16^{th}$ one are respectively:
D1=10, D2=5, D3=10, D4=20, D5=20, D6=10, D7=5, D8=5,
D9=20, D10=5, D11=10, D12=20, D13=5, D14=5, D15=2, D16=2.

| Number i | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| Denomination D | 10 | 5 | 10 | 20 | 20 | 10 | 5 | 5 | 20 | 5 | 10 | 20 | 5 | 5 | 2 | 50 | |
| Array S | 10 | 15 | 25 | 45 | 65 | 75 | 80 | 85 | 105 | 110 | 120 | 140 | 145 | 150 | 152 | 202 | |

S(1) = D(1)
S2 = D1 + D2

$$S(n) = D1 + D2 + \cdots + Dn = \sum_{i=1}^{n} D_i$$

If a banknote dispensing limit is 110, 10 banknotes should be outputted from the mixed banknote box for the banknote outputting task. A banknote dispensing calculation is $S(10) = \sum_{i=1}^{10} D_i = 110$.

If the $6^{th}$ banknote with a denomination of 10 is recycled and not outputted as calculated, that is, five banknotes with a total amount of 65 yuan are outputted at present.

If banknotes with an amount of 45 (110-65=45) yuan are further dispensed and continue to be outputted, the banknote outputting task is accomplished.

Now the banknote arrangements in the mixed banknote box are:

| Number i | 1 | 2 | 3 | 4 | 5 | 6 | 7 | 8 | 9 | 10 | |
|---|---|---|---|---|---|---|---|---|---|---|---|
| Denomination D | 5 | 5 | 20 | 5 | 10 | 20 | 5 | 5 | 2 | 50 | |
| Array S | 5 | 10 | 30 | 35 | 45 | 65 | 70 | 75 | 77 | 127 | |

Through the banknote dispensing calculation, $S(5)=\sum_{i=1}^{5}D_i=45$ gives that 5 banknotes with a total banknote amount of 45 yuan should be outputted from the mixed banknote box for the banknote dispensing. Thus based on the previous outputted banknotes of 65 yuan, the banknote outputting with a total banknote amount of 110 yuan is achieved.

In a second practical application, banknotes are outputted from one mixed banknote box and a continued banknote dispensing is needed, in which outputted banknotes are recycled.

For example, if there are 16 banknotes in the mixed banknote box A, and denominations from the first one to a 16th one are respectively:

D1=10, D2=5, D3=10, D4=20, D5=20, D6=10, D7=5, D8=5,
D9=20, D10=5, D11=10, D12=20, D13=5, D14=5, D15=2, D16=2.

| Number i | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| Denomination D | 10 | 5 | 10 | 20 | 20 | 10 | 5 | 5 | 20 | 5 | 10 | 20 | 5 | 5 | 2 | 50 | |

| Array S | 10 | 15 | 25 | 45 | 65 | 75 | 80 | 85 | 105 | 110 | 120 | 140 | 145 | 150 | 152 | 202 | |
|---|---|---|---|---|---|---|---|---|---|---|---|---|---|---|---|---|---|

If a banknote dispensing limit is 120, 11 banknotes should be outputted from the mixed banknote box for the banknote outputting task. A banknote dispensing calculation is $S(11)=\sum_{i=1}^{11}D_i=120.$

If the 6th banknote with a denomination of 10 is recycled and not outputted as calculated, that is, five banknotes with a total amount of 65 yuan are outputted at present.

Now the banknote arrangements in the mixed banknote box are:

| Number i | 1 | 2 | 3 | 4 | 5 | 6 | 7 | 8 | 9 | 10 | |
|---|---|---|---|---|---|---|---|---|---|---|---|
| Denomination D | 5 | 5 | 20 | 5 | 10 | 20 | 5 | 5 | 2 | 50 | |
| Array S | 5 | 10 | 30 | 35 | 45 | 65 | 70 | 75 | 77 | 127 | |

If banknotes with an amount of 55 (120-65=55) yuan are further dispensed and continue to be outputted, the banknote outputting task is accomplished.

Through the banknote distribution calculation, $S(5) = 45 < 55 < S(6) = 65$ shows that the banknote dispensing is failed.

One outputted banknote is recycled, i.e., a banknote with a denomination of 20 yuan is transferred to another banknote box or a recycling box, thus a sum of the outputted banknotes becomes: 65-20=45.

If banknotes with an amount of 75 (120-45=75) yuan are further dispensed, and continue to be outputted, the banknotes outputting task is accomplished.

A banknote dispensing of 75 yuan is performed on remaining banknotes in the mixed banknote box. And calculation S(8)=75 shows that the banknote dispensing is successful.

8 banknotes with a total amount of 75 yuan are continued to be outputted from the mixed banknote box. Based on the previous outputted banknotes of 45 yuan, the banknote outputting with a total amount of 120 yuan is achieved.

In a third practical application, the denomination of a banknote recycled from a mixed banknote box is equal to that of a next banknote to the last outputted banknote as the banknote dispensing calculated.

| Number i | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| Denomination D | 10 | 5 | 10 | 20 | 20 | 10 | 5 | 5 | 20 | 5 | 10 | 20 | 5 | 5 | 2 | 50 | |
| Array S | 10 | 15 | 25 | 45 | 65 | 75 | 80 | 85 | 105 | 110 | 120 | 140 | 145 | 150 | 152 | 202 | |

If a banknote dispensing limit is 110, S(10)=110 gives a a dispensing calculation of 10 banknotes.

If the 3rd banknote with a denomination of 10 is recycled, the banknote dispensing is suspended.

It is inquired that the 10th banknote in the mixed banknote box is the last banknote to be outputted as calculated and that a denomination of the eleventh banknote is 10, which is equal to that of the 3rd recycled banknote.

The banknote outputting operation is still to continue to output banknotes as calculated, and finally the eleventh banknote with a denomination of 10 is outputted to achieve the object of banknote outputting with a total amount of 110 yuan. The banknote dispensing is successful and the process ends.

In a fourth practical application, banknotes are outputted from two mixed banknote boxes.

It is assumed that there are two mixed banknote boxes storing M banknotes and N banknotes respectively, with denominations $A_i(1{\leq}i{\leq}M)$ and $B_j(1{\leq}j{\leq}N)$ respectively. The banknote dispensing limit is T. If a and b meet

$$T = \sum_{i=1}^{a} A_i + \sum_{j=1}^{b} B_j$$

where $1{\leq}a{\leq}M$, $1{\leq}b{\leq}N$, the banknote dispensing is successful.

If a banknote recycling occurs during banknote outputting, e.g., a banknote with a denomination of $A_c$ or $B_d$ is withdrawn, a total amount of outputted banknotes is $T' = \sum_{i=1}^{c} A_i$ or $T' = \sum_{i=1}^{a} A_i + \sum_{j=1}^{d} B_j$ And a second banknote dispensing for banknotes with a total amount of $T'' = T - T'$ is performed with a total amount of $T'' = T - T'$ *are* dispensed from mixed banknote boxes A and B, the banknote dispensing is successful. If a, b, c and d meet

$$T = \sum_{i=1}^{a} A_i + \sum_{j=1}^{b} B_j - A_c \quad \text{or} \quad T = \sum_{i=1}^{a} A_i + \sum_{j=1}^{b} B_j - B_d$$

where $1{\leq}a{\leq}M$, $1{\leq}b{\leq}N,1{\leq}c{\leq}a,1{\leq}d{\leq}b,$ the second banknote dispensing ends successfully.

If a banknote jam occurs in the mixed banknote box during banknote outputting, e.g., a banknote with a denomination of $A_c$ or $B_d$ is recycled, a total amount of outputted banknotes is $T' = \sum_{i=1}^{c} A_i$ or $T' = \sum_{i=1}^{a} A_i + \sum_{j=1}^{d} B_j$.

A second banknote dispensing for banknotes with a total amount of $T'' = T - T'$ is performed, that is banknotes with a total amount of $T'' = T - T'$ are dispensed from mixed banknote boxes A and B, the banknote dispensing is successful. If a, b, c and d meet

$$T = \sum_{i=1}^{a} A_i + \sum_{j=1}^{b} B_j - A_c \quad \text{or} \quad T = \sum_{i=1}^{a} A_i + \sum_{j=1}^{b} B_j - B_d$$

where $1{\leq}a{\leq}M$, $1{\leq}b{\leq}N,1{\leq}c{\leq}a,1{\leq}d{\leq}b,$ the second banknote dispensing ends successfully.

Examples are described here. There are two mixed banknote boxes M1 (storing banknotes with denominations of 2 and 5) and M2 (storing banknotes with denominations of 10 and 20) in a financial self-service device, and available banknote information of banknote boxes M1 and M2 is shown below.

Table for illustrating available banknote information of banknote box M1

| Number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Denomination D | 5 | 5 | 2 | 2 | 2 | 5 | 2 | 5 | 2 | 5 | 5 | 5 | 2 | 5 |
| Array S | 5 | 10 | 12 | 14 | 16 | 21 | 23 | 28 | 30 | 35 | 40 | 45 | 47 | 52 |

Table for illustrating available banknote information of banknote box M2

| Number i | 1 | 2 | 3 | 4 | 5 | 6 | 7 | 8 | 9 | 10 |
|---|---|---|---|---|---|---|---|---|---|---|
| Denomination D | 20 | 10 | 20 | 20 | 10 | 10 | 10 | 10 | 20 | 10 |
| Array S | 20 | 30 | 50 | 70 | 80 | 90 | 100 | 110 | 130 | 140 |

If a banknote dispensing limit is 145, a banknote dispensing result may be: outputting 12 banknotes from the banknote box M1 and outputting 7 banknotes from the banknote box M2.

A banknote recycling occurs during banknote outputting, e.g., a banknote in the banknote box M1 is recycled.

If the 10th banknote in the banknote box M1 is recycled, a total amount of outputted banknotes is 30, and further banknotes with a total amount of 115 (145-30=115) yuan needs to be outputted. Banknotes with the amount of 115 yuan is dispensed, and table for illustrating remaining banknote information in the banknote box M1 is shown as below.

| Number i | 1 | 2 | 3 | 4 |
|---|---|---|---|---|
| Denomination D | 5 | 5 | 2 | 5 |
| Array S | 5 | 10 | 12 | 17 |

Banknote dispensing is performed from the dispensing according to the banknote dispensing limit, 145-30=110. A banknote dispensing result is: outputting one more banknote from the banknote box M1, with a total amount of 5 yuan; and outputting 8 banknotes from the banknote box M2, with a total amount of 110 yuan.

Therefore, the final banknote dispensing result is: outputting 11 banknotes from the banknote box M1 (a total amount is 35, with the 10th banknote recycled) and outputting 8 banknotes from the banknote box M2 (a total amount is 110). The banknote dispensing is successful.

A banknote jam occurs during banknote outputting, e.g., in the banknote box M1.

If the banknote jam occurs to the eleventh banknote in the banknote box M1, the banknote box M1 cannot continue to output banknotes. A total amount of outputted banknotes is 35, and further, banknotes with the amount of 110 (145-35=110) yuan should be outputted. Banknote dispensing is performed for banknotes with a total amount of 110 yuan, a banknote distribution result is: dispensing 8 banknotes from banknote box M2 (the banknote box M1 cannot continue to output banknotes due to the banknote jam). Therefore, the final banknote dispensing result is: outputting 10 banknotes from the banknote box M1 (a total amount is 30) and outputting8 banknotes from the banknote box M2 (a total amount is 110). The banknote dispensing is successful.

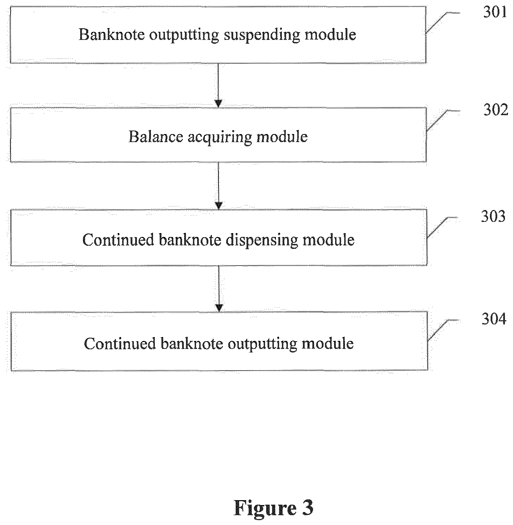

The above described is the banknote dispensing method according to the embodiment of the present disclosure. Hereinafter, a banknote dispensing apparatus according to an embodiment of the present disclosure is described in detail. Referring to Figure 3, the banknote dispensing apparatus according to an embodiment of the present disclosure includes: a banknote outputting suspending module 301, a balance acquiring module 302, a continued banknote dispensing module 303 and a continued banknote outputting module 304.

The banknote outputting suspending module 301 is configured to suspend a banknote outputting in a case that the banknote outputting from a mixed banknote box becomes abnormal.

The balance acquiring module 302 is configured to acquire a banknote outputting balance according to a banknote dispensing limit and a total amount of outputted banknotes.

The continued banknote dispensing module 303 is configured to continue the banknote dispensing according to the banknote outputting balance to obtain a continued banknote dispensing result.

The continued banknote outputting module 304 is configured to continue to output banknotes according to the continued banknote dispensing result.

In the embodiments of the present disclosure, firstly, the banknote outputting from banknote outputting suspending module 301 is suspended in a case that the banknote outputting from a mixed banknote box becomes abnormal. Then, the balance acquiring module 302 acquires a banknote outputtingbalance according to a banknote dispensing limit and a total amount of outputted banknotes. Afterwards, the continued banknote dispensing module 303 continues banknote dispensing according to the banknote outputting balance to obtain a continued banknote dispensing result. Finally, the continued banknote outputting module 304 outputs banknotes according to the continued banknote dispensing result. In the embodiment, when there is an abnormality, banknote dispensing is continued according to the banknote outputting balance and banknotes are continued to be outputted according to a continued banknote dispensing result, and therefore, a current banknote dispensing limit is satisfied without the need of recycling outputted banknotes for the next dispensing according to the banknote dispensing limit. Hence a second banknote dispensing and a second banknote outputting are avoided. Not only wear on hardware of a machine core and maintenance cost are reduced, but also time for banknote dispensing is decreased and the banknote outputting efficiency is improved, thereby improving user satisfaction on products.

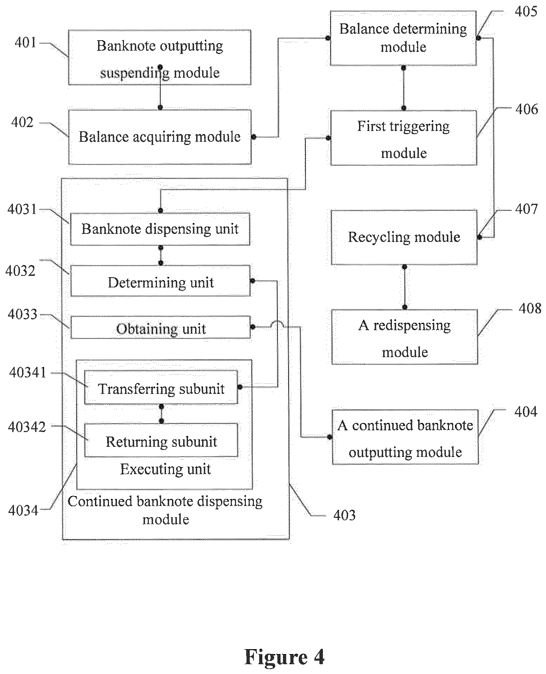

For understanding, a banknote dispensing apparatus according to an embodiment of the present disclosure is described in detail below. Referring to Figure 4, a banknote dispensing apparatus according to an embodiment of the present disclosure includes a banknote outputting suspending module 401, a balance acquiring module 402, a continued banknote dispensing module 403 and a continued banknote outputting module 404.

The banknote outputting suspending module 401 is configured to suspend a banknote outputting in a case the banknote outputting from a mixed banknote box becomes abnormal.

The balance acquiring module 402 is configured to acquire a banknote outputting balance according to a banknote outputting limit and a total amount of outputted banknotes.

The continued banknote dispensing module 403 is configured to continue the banknote dispensing according to the banknote outputting balance to obtain a continued banknote dispensing result.

The continued banknote outputting module 404 is configured to continue to output banknotes according to the continued banknote dispensing result.

In the embodiment, the continued banknote dispensing module 403 may specifically include a banknote dispensing unit 4031, a determining unit 4032, an obtaining unit 4033 and an executing unit 4034.

The banknote dispensing unit 4031 is configured to continue the banknote dispensing according to the banknote outputting balance.

The determining unit 4032 is configured to determine whether the banknote dispensing by the banknote dispensing unit 4031 is successful.

The obtaining unit 4033 is configured to obtain a continued banknote dispensing result if the determining unit 4032 determines that the banknote dispensing is successful.

The executing unit 4034 is configured to execute a preset operation if the determining unit 4032 determines that the banknote dispensing is failed.

In the embodiment, the executing unit 4034 may specifically include a transferring subunit 40341 and a returning subunit 40342.

The transferring subunit 40341 is configured to transfer one outputted banknote if the determining unit determines that the banknote dispensing is failed.

The returning subunit 40342 is configured to return to trigger the balance acquiring module 402 after an execution of the transferring subunit.

In the embodiment, the banknote dispensing apparatus may further include a balance determining module 405, a first triggering module 406, a recycling module 407 and a redispensing module 408.

The balance determining module 405 is configured to determine whether the banknote outputting balance is less than the banknote dispensing limit.

The first triggering module 406 is configured to trigger the continued banknote dispensing module 403 if the balance determining module 405 determines that the banknote outputting balance is less than the banknote dispensing limit.

The recycling module 407 is configured to recycle all outputted banknotes if the balance determining module 405 determines that the banknote outputting balance is not less than the banknote dispensing limit.

The redispensing module 408 is configured to redispense banknotes according to the banknote dispensing limit after an execution of the recycling module 407.

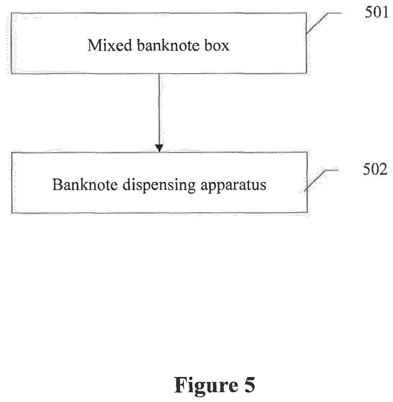

A banknote dispensing apparatus is described in detail above, and a financial self-service device is described in detail hereinafter. Referring to Figure 5, a financial self-service device according to an embodiment of the present disclosure includes multiple mixed banknote boxes 501 and a banknote dispensing apparatus 502 in embodiments corresponding to Figure 3 or Figure 4.

The mixed banknote boxes 501 are configured to store banknotes of multiple denominations and access the banknotes in a stack manner.

It is to be known clearly by those skilled in the art that, for convenient and clear description, for specific operation processes of the above system, device and unit, reference may be made to the corresponding process in the above method embodiment, which is not described here.

# EP 3 244 373 A1

In the embodiments mentioned in the disclosure, it is to be understood that, the disclosed system, device and method may be implemented in other ways. For example, the above device embodiment is only illustrative. For example, the division of the units is only a logical functional division. In practice, there may be other divisions. For example, multiple units or assembles may be combined or may be integrated into another system. Alternatively, some features may be neglected or not be performed. The displayed or discussed mutual coupling or direct coupling or communication connection may be an indirect coupling or communication connection via some interfaces, devices or units, which may be in an electrical, mechanical or other form.

The unit described as a separate component may be or may not be separate physically, and the component which is displayed as a unit may be or may not be a physical unit, that is, may be located at a position, or may be distributed over multiple network units. Some or all of the units may be selected as required to implement the solution of the embodiment.

Further, the functional units in the embodiments of the disclosure may be integrated into one processing unit, and may exist physically separately, and may be integrated into one unit by two or more. The above integrated unit may be implemented in hardware, and may also be implemented by using a software functional unit.

When being implemented by using a software functional unit and being sold and used as a separate product, the integrated unit may be stored in a computer readable storage medium. Based on this, essential part or a part contributing to the prior art of the technical solution of the disclosure or the whole or part of the technical solution may be embodied in a software product which is stored in a storage medium, including several instructions for causing a computer device (which may be a personal computer, a server, a network device or the like) to perform all or some of the steps of the method in the embodiment of the disclosure. The existing storage medium includes various mediums capable of storing program code, such as U disk, movable disk, Read-Only Memory (ROM), Random Access Memory (RAM), magnetic disk or optical disk.

As described above, the above embodiments are only intended to describe the technical solutions of the disclosure, but not to limit the scope of the disclosure. Although the disclosure is described in detail with reference to the above embodiments, it should be understood by those ordinal skilled in the art that modifications can be made to the technical solutions recorded in the above embodiments or equivalent replacements can be made to some or all of the technical features thereof, which modifications and equivalent replacements will not make the corresponding technical solutions deviate from the scope of the technical solutions of the embodiments of the disclosure.

## Claims

1.   A banknote dispensing method, comprising:

    suspending a banknote outputting from a mixed banknote box in a case that the banknote outputting becomes abnormal;
    acquiring a banknote outputting balance according to a banknote dispensing limit and a total amount of outputted banknotes;
    continuing the banknote dispensing according to the banknote outputting balance to obtain a continued banknote dispensing result; and
    continuing to output banknotes according to the continued banknote dispensing result.

2.   The method according to claim 1, wherein the continuing the banknote dispensing according to the banknote outputting balance to obtain a continued banknote dispensing result comprises:

    continuing the banknote dispensing according to the banknote outputting balance;
    determining whether the banknote dispensing is successful;
    obtaining the continued banknote dispensing result in case of a positive determination; or executing a preset operation in case of negative determination.

3.   The method according to claim 2, wherein the executing a preset operation comprises:

    transferring one outputted banknote; and
    returning to the step of acquiring the banknote outputting balance according to the banknote dispensing limit and a total amount of outputted banknotes.

4.   The method according to claim 1, wherein after the acquiring the banknote outputting balance according to the banknote dispensing limit and a total amount of outputted banknotes, the method further comprises:

determining whether the banknote outputting balance is less than the banknote dispensing limit; and

going to the step of continuing the banknote dispensing according to the banknote outputting balance in case of positive determination, or redispensing banknotes according to the banknote dispensing limit in case of negative determination.

**5.** The method according to claim 4, wherein before the redispensing banknotes according to the banknote dispensing limit, the method further comprises: recycling all outputted banknotes.

**6.** A banknote dispensing apparatus, comprising:

a banknote outputting suspending module, configured to suspend a banknote outputting in a case that the banknote outputting from a mixed banknote box becomes abnormal;

a balance acquiring module, configured to acquire a banknote outputting balance according to a banknote dispensing limit and a total amount of outputted banknotes;

a continued banknote dispensing module, configured to continue banknote dispensing according to the banknote outputting balance to obtain a continued banknote dispensing result; and

a continued banknote outputting module, configured to continue to output banknotes according to the continued banknote dispensing result.

**7.** The banknote dispensing apparatus according to claim 6, wherein the continued banknote dispensing module specifically comprises:

a banknote dispensing unit, configured to continue the banknote dispensing according to the banknote outputting balance;

a determining unit, configured to determine whether the banknote dispensing by the banknote dispensing unit is successful;

an obtaining unit, configured to obtain a continued banknote dispensing result if the determining unit determines that the banknote dispensing is successful; and

an executing unit, configured to execute a preset operation if the determining unit determines that the banknote dispensing is failed.

**8.** The banknote dispensing apparatus according to claim 6, wherein the executing unit specifically comprises:

a transferring subunit, configured to transfer one outputted banknote if the determining unit determines that the banknote dispensing is failed; and

a returning subunit, configured to return to trigger the balance acquiring module after an execution of the transferring subunit.

**9.** The banknote dispensing apparatus according to claim 6, further comprising:

a balance determining module, configured to determine whether the banknote outputting balance is less than the banknote dispensing limit;

a first triggering module, configured to trigger the continued banknote dispensing module if the balance determining module determines that the banknote outputting balance is less than the banknote dispensing limit;

a recycling module, configured to recycle all outputted banknotes if the balance determining module determines that the banknote outputting balance is not less than the banknote dispensing limit; and

a redispensing module, configured to redispense banknotes according to the banknote dispensing limit after an execution of the recycling module.

**10.** A financial self-service device, comprising a plurality of mixed banknote boxes, which are configured for storing banknotes of a plurality of denominations mixedly and accessing the banknotes in a stack manner, wherein the financial self-service device further comprises the banknote dispensing apparatus according to any one of claim 6 to 9.

Suspend banknote outputting from a mixed banknote box in a case that the banknote outputting becomes abnormal — 101

Acquire a banknote outputting balance according to a banknote dispensing limit and a total amount of outputted banknotes — 102

Continue the banknote dispensing according to the banknote outputting balance, to obtain a continued banknote dispensing result — 103

Continue to dispense banknotes according to the continued banknote dispensing result — 104

**Figure 1**

EP 3 244 373 A1

NO                    Determine whether an abnormality                    ⌐ 201
                     occurs to banknote outputting from a mixed
                              banknote box

┌──────────┐                          YES
│ Banknote │                                                    ⌐ 202
│ dispensing is │              ┌────────────────────────────┐
│ successful │                │  Suspend banknote outputting  │
└──────────┘                  └────────────────────────────┘

                    ┌──────────────────────────────────────┐   ⌐ 203
                    │ Acquire a banknote outputting balance according to a │
                    │ banknote dispensing limit and a total amount of outputted │
                    │              banknotes                 │
                    └──────────────────────────────────────┘

                              Determine whether the                        ⌐ 204
                    banknote outputting balance is less than the banknote
                                dispensing limit

                                    NO
                                                              ⌐ 205
                    ┌──────────────────────────────────────┐
                    │       Recycle all outputted banknotes       │
                    └──────────────────────────────────────┘
YES                 ┌──────────────────────────────────────┐   ⌐ 206
                    │ Redispense banknotes according to the banknote │
                    │              dispensing limit          │
                    └──────────────────────────────────────┘

                              Continue banknote                            ⌐ 207
                    dispensing according to the banknote outputting
                    balance, and determine whether banknote dispensing is
                                successful

                                    YES
                    ┌──────────────────────────────────────┐   ⌐ 208
                    │ Obtain a continued banknote dispensing result │
                    └──────────────────────────────────────┘
                    ┌──────────────────────────────────────┐   ⌐ 209
                    │ Continue banknote outputting according to │       NO
                    │  the continued banknote dispensing result │
                    └──────────────────────────────────────┘
┌──────────┐        ┌──────────────────────────────────────┐
│ Return to │◄──────│      Transfer one outputted banknote      │◄──────
│ step 203 │        └──────────────────────────────────────┘
└──────────┘
    ⌐ 211                              ⌐ 210

**Figure 2**

15

EP 3 244 373 A1

```
┌─────────────────────────────────────────────┐
│      Banknote outputting suspending module    │──── 301
└─────────────────────────────────────────────┘
                      │
                      ▼
┌─────────────────────────────────────────────┐
│           Balance acquiring module            │──── 302
└─────────────────────────────────────────────┘
                      │
                      ▼
┌─────────────────────────────────────────────┐
│      Continued banknote dispensing module     │──── 303
└─────────────────────────────────────────────┘
                      │
                      ▼
┌─────────────────────────────────────────────┐
│      Continued banknote outputting module     │──── 304
└─────────────────────────────────────────────┘
```

**Figure 3**

**Figure 4**

```
┌─────────────────────────────────────┐
│                                      │──── 501
│         Mixed banknote box           │
│                                      │
└─────────────────────────────────────┘
                    │
                    ▼
┌─────────────────────────────────────┐
│                                      │──── 502
│    Banknote dispensing apparatus     │
│                                      │
└─────────────────────────────────────┘
```

**Figure 5**

# INTERNATIONAL SEARCH REPORT

| | International application No. |
|---|---|
| | PCT/CN2015/085256 |

## A. CLASSIFICATION OF SUBJECT MATTER

G07D 11/00 (2006.01) i

According to International Patent Classification (IPC) or to both national classification and IPC

## B. FIELDS SEARCHED

Minimum documentation searched (classification system followed by classification symbols)

G07D 11/-

Documentation searched other than minimum documentation to the extent that such documents are included in the fields searched

Electronic data base consulted during the international search (name of data base and, where practicable, search terms used)

CNPAT, CNKI, WPI, EPODOC: finance, withdraw, stock, sheet, block, image forming apparatus, copier, printer, surplus, automatic telling machine, forged money, worn coin, mutilated banknote, suspend, out, match, note adding, cash dispense, cashier, ATM, note, cash, money, banknote?, bill, sheet, paper, currency, balance, margin, incompetent, unqualif+, forged, error, abnormal+, deformit+, disquali+, stop+, pause, underproof, abnorm+, dispens+, handl+, distribut+, discharg+

## C. DOCUMENTS CONSIDERED TO BE RELEVANT

| Category* | Citation of document, with indication, where appropriate, of the relevant passages | Relevant to claim No. |
|---|---|---|
| PX | CN 104504804 A (GUANGZHOU GRG BANKING INFORMATION TECHNOLOGY CO., LTD. et al.), 08 April 2015 (08.04.2015), claims 1-10, description, paragraphs [0049]-[0083] and [0146]-[0172], and figures 1-5 | 1-10 |
| A | CN 104134275 A (GRG BANKING EQUIPMENT CO., LTD.), 05 November 2014 (05.11.2014), description, paragraphs [0042]-[0052], [0263]-[0267] and [0273]-[0277], and figures 1 and 4-5 | 1-10 |
| A | CN 101192325 A (HITACHI-OMRON TERMINAL SOLUTIONS, CORP.), 04 June 2008 (04.06.2008), the whole document | 1-10 |
| A | WO 2014024613 A1 (GLORY LTD.), 13 February 2014 (13.02.2014), the whole document | 1-10 |
| A | JP 2010072741 A (GLORY KOGYO KK.), 02 April 2010 (02.04.2010), the whole document | 1-10 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 September 2015 (14.09.2015) | 08 October 2015 (08.10.2015) |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>JIN, Weihua<br><br>Telephone No.: (86-10), 010-82245800 |

Form PCT/ISA/210 (second sheet) (July 2009)

## INTERNATIONAL SEARCH REPORT

| | International application No. |
|---|---|
| | **PCT/CN2015/085256** |

**C (Continuation).      DOCUMENTS CONSIDERED TO BE RELEVANT**

| Category* | Citation of document, with indication, where appropriate, of the relevant passages | Relevant to claim No. |
|---|---|---|
| A | US 2011246278 A1 (GLORY LTD.), 06 October 2011 (06.10.2011), the whole document | 1-10 |
| A | US 2009229950 A1 (GLORY LTD.), 17 September 2009 (17.09.2009), the whole document | 1-10 |
| A | JP 2011225310 A (HITACHI OMRON TERMINAL SOLU.), 10 November 2011 (10.11.2011), the whole document | 1-10 |

Form PCT/ISA/210 (continuation of second sheet) (July 2009)

## INTERNATIONAL SEARCH REPORT
### Information on patent family members

International application No.

**PCT/CN2015/085256**

| Patent Documents referred in the Report | Publication Date | Patent Family | Publication Date |
|---|---|---|---|
| CN 104504804 A | 08 April 2015 | None | |
| CN 104134275 A | 05 November 2014 | None | |
| CN 101192325 A | 04 June 2008 | JP 2008140122 A | 19 June 2008 |
| | | JP 4909034 B2 | 04 April 2012 |
| | | CN 101192325 B | 02 June 2010 |
| WO 2014024613 A1 | 13 February 2014 | CN 104520908 A | 15 April 2015 |
| | | EP 2881919 A1 | 10 June 2015 |
| | | US 2015206402 A1 | 23 July 2015 |
| | | JP 2014032586 A | 20 February 2014 |
| | | JP 2014035648 A | 24 February 2014 |
| JP 2010072741 A | 02 April 2010 | JP 5242310 B2 | 24 July 2013 |
| US 2011246278 A1 | 06 October 2011 | None | |
| US 2009229950 A1 | 17 September 2009 | US 2009229949 A1 | 17 September 2009 |
| | | CN 101533542 A | 16 September 2009 |
| JP 2011225310 A | 10 November 2011 | JP 5468452 B2 | 09 April 2014 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510009633

- CN 201410372966